# EUROPÄISCHE PATENTSCHRIFT

(11) **EP 3 158 323 B1**
(45) Veröffentlichungstag und Bekanntmachung des Hinweises auf die Patenterteilung: **11.05.2022**
(21) Anmeldenummer: 15730192.0
(22) Anmeldetag: 22.06.2015
(51) Int. Cl.: G01N 21/55, G01N 21/59, G01N 21/84

(54) **ANORDNUNG ZUR BESTIMMUNG VON EIGENSCHAFTEN UND/ODER PARAMETERN EINER PROBE UND/ODER MINDESTENS EINER AUF ODER AN EINER OBERFLÄCHE EINER PROBE AUSGEBILDETEN SCHICHT**
SYSTEM FOR THE DETERMINATION OF PROPERTIES AND/OR PARAMETERS OF A SAMPLE AND/OR OF AT LEAST ONE THIN FILM GROWN ON A SAMPLE
SYSTÈME POUR LA DÉTERMINATION DES PROPRIÉTÉS ET/OU DES PARAMÈTRES D'UN ÉCHANTILLON ET/OU D'UNE COUCHE MINCE CRUE SUR UN ÉCHANTILLON

(30) Priorität: 23.06.2014 DE 102014009372
(43) Veröffentlichungstag der Anmeldung: 26.04.2017
(73) Patentinhaber: Fraunhofer-Gesellschaft zur Förderung der angewandten Forschung e.V., 80686 München (DE)
(72) Erfinder: GRÄHLERT, Wulf, 01277 Dresden (DE); WOLLMANN, Philipp, 01189 Dresden (DE); GRUBER, Florian, 01127 Dresden (DE)
(74) Vertreter: Pfenning, Meinig & Partner mbB
(86) Internationale Anmeldenummer: PCT/EP2015/063984
(87) Internationale Veröffentlichungsnummer: WO 2015/197555

(56) Entgegenhaltungen:
- WO-A1-2013/157641
- DE-B3-102006 034 776
- US-A1- 2001 052 979
- US-A1- 2008 245 979
- US-A1- 2011 216 324
- US-B2- 7 301 649

## Beschreibung

Die Erfindung betrifft eine Anordnung zur Bestimmung von Eigenschaften und/oder Parametern einer Probe und/oder mindestens einer auf oder an einer Oberfläche einer Probe ausgebildeten Schicht. Dabei sollen unter einer Probe Festkörper, mit mindestens einer Schicht beschichtete Festkörper oder aus mehreren übereinander angeordneten Schichten gebildete Elemente verstanden werden.

Dünne Schichten (Ein- oder Mehrschichtsystem auf definierten Substraten) sind in einer Vielzahl Anwendungen essentiell, z.B. Halbleiterschichten, Verschleißschutzschichten, optische Schichten, etc. als solche bekannt. Für deren Funktionalität ist die Einhaltung vorgegebener Schichtparameter/-eigenschaften in vorgegebenen Toleranzbereichen erforderlich. Dabei können die wichtigen Parameter die Schichtdicke(n), die optische(n) Brechzahl(en), die Absorptionskonstante(n) bei bestimmten Wellenlängen oder die Parameter zur Beschreibung deren Verläufe über einen bestimmten Wellenlängenbereich) sein. Weitere Eigenschaften von Schichten aber auch homogenen Proben können die Anzahl enthaltener Ladungsträger pro Fläche bzw. Volumen (Ladungsträgerkonzentration) vorhanden bzw. enthaltenen Inhomogenitäten oder Defekte (Partikel, Einschlüsse u.a.m.) sein.

Sehr oft ist es notwendig, diese Parameter über die gesamte Fläche einer Probe sicher und in kurzer Zeit zu bestimmen. Dabei sollte die die Verteilung der obigen Parameter über die gesamte Probenfläche ortsaufgelöst bestimmt werden können. Dabei sollte eine statistisch gesicherte Aussage über die gesamte Probe möglich sein.

Üblicherweise werden für die oben genannten Eigenschaften und Parameter unterschiedliche dezidierte Messverfahren genutzt, die jedoch größtenteils Einzelpunkt-Messungen sind, bei denen durch eine Probe- oder Sensorbewegung eine Ortsauflösung (x bzw. x-y) der jeweiligen Messgröße erreicht werden kann (Mapping). Eine bildliche Darstellung der erfassten Messwerte muss aufwändig gesondert erstellt werden.

So kann die Schichtdickenverteilung üblicherweise z.B. interferometrisch bestimmt werden. Für andere o.g. Parameter oder Eigenschaften kann die Ellipsometrie genutzt werden. Dies ist aber zeitgleich lediglich für eine Wellenlänge möglich, wodurch die Genauigkeit und/oder der erforderliche Zeitaufwand nachteilig sind.

WO 2013/157641 A1 und EP 2 840 368 A1 betreffen jeweils eine Methode und eine Vorrichtung zur spektroskopischen Analyse von Beschichtungen, insbesondere Farbbeschichtungen von Fahrzeugen, hinsichtlich Farbe und Textur.

DE 10 2006 034 776 B3 offenbart ein Verfahren und eine Messvorrichtung zur ellipsometrischen Vermessung von Strukturelementen sowie eine Verwendung des Verfahrens in einer Halbleiterfertigungsanlage.

In US 7 301 649 B2 wird ein System für scatterometrische Messungen und deren Anwendung beschrieben.

US 2001/052979 A1 beschreibt ein spektroskopisches bildgebendes System mit einem polarisierenden Strahlteilungselement.

US 2008/0245979 A1 offenbart ein Messsystem zur Bestimmung von Glanzeigenschaften bei Druckerzeugnissen.

US 2011/216324 A1 offenbart eine Anordnung zur Bestimmung von Eigenschaften und/oder Parametern einer Probe durch Projektion einer Strahlung einer elektromagnetischen Quelle auf die Probe und durch gleichzeitige Durchführung von orts- und wellenlängenaufgelösten Messungen innerhalb eines Wellenlängenintervalls.

Es ist daher Aufgabe der Erfindung, Möglichkeiten für eine Bestimmung laterale Verteilung von Eigenschaften und/oder Parametern von Proben oder auf Proben ausgebildeten oder bei Proben vorhandenen Schichten in kurzer Zeit mit sehr guter Genauigkeit erreichbar ist, anzugeben, wobei bevorzugt eine bildliche Darstellung der Ergebnisse mit geringem zusätzlichen Aufwand möglich sein sollte.

Erfindungsgemäß wird diese Aufgabe mit einer Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die erfindungsgemäße Anordnung zur Bestimmung von Eigenschaften und/oder Parametern einer Probe und/oder mindestens einer auf einer Oberfläche einer Probe ausgebildeten oder an der Probe vorhandenen Schicht, weist mehrere Detektoren auf, die zur ortsaufgelösten spektralen Analyse elektromagnetischer Strahlung innerhalb eines Wellenlängenintervalls ausgebildet sind. Diese Detektoren sind in einer Reihen oder einer Reihen- und Spaltenanordnung angeordnet. Die Detektoren sind mit einer elektronischen Auswerteeinheit verbunden und so angeordnet, dass von einer breitbandigen Strahlungsquelle emittierte elektromagnetische Strahlung entweder nach einer Reflexion an der Oberfläche der Probe oder einer auf der Probe ausgebildeten Schicht und/oder nach dem Durchstrahlen einer für die elektromagnetische Strahlung transparenten Probe auf die Detektoren auftrifft. Dabei erfolgt die Bestrahlung so, dass auf einer Fläche, von der die elektromagnetische Strahlung reflektiert oder durch die Fläche transmittiert wird, eine homogene Intensität der elektromagnetischen Strahlung eingehalten ist. Die jeweils gleichzeitig zu detektierende Fläche soll also mit homogener Intensität bestrahlt werden.

Die elektronische Auswerteeinheit ist so ausgebildet, dass die orts- und wellenlängenaufgelöst erfassten Messsignale der Detektoren innerhalb eines Wellenlängenintervalls mit einem durch Simulation erhaltenen theoretischen wellenlängenabhängigen Verlauf der jeweiligen gemessenen Strahlungsintensitäten oder einem durch eine Kalibrierung an mindestens einer bekannten Probe erhaltenen Verlauf verglichen werden, um eine Aussage zur Bestimmung mindestens einer Eigenschaft oder mindestens eines Parameters der Probe oder mindestens einer auf der Probe ausgebildeten oder an der Probe vorhandenen Schicht zu erhalten. Das Wellenlängenintervall in dem die Auswertung erfolgt sollte zumindest eine Teilmenge des Wellenlängenintervalls der für die Bestrahlung genutzten elektromagnetischen Strahlung sein.

In einer Reihe sollten dabei mindestens 30, bevorzugt mindestens 100 Detektoren angeordnet sein.

Die Bestrahlung der Fläche sollte mit mindestens einem Winkel im Bereich 0° bis < 90° in Bezug zur Normalen der Oberfläche der Probe erfolgen. Bei einer Durchstrahlung eine für die elektromagnetische Strahlung transparenten Probe sollte der Winkel von zumindest nahezu 0° zur Probennormalnen eingehalten sein, also die Strahlung möglichst senkrecht auf die Oberfläche der Probe gerichtet werden, um den reflektierten Anteil so klein als möglich zu halten. Die Bestrahlung und Detektion kann auch bei veränderlichem Einfallswinkel der elektromagnetischen Strahlung durchgeführt werden. Wie bereits zum Ausdruck gebracht können dabei Einfallswinkel im Bereich 45° bis maximal 89° gewählt werden. Bevorzugt sind Einfallswinkel im Bereich 60° bis 80°, wenn reflektierte Strahlung detektiert werden soll, unabhängig davon ob ein konstanter Einfallswinkel oder verschiedene Einfallswinkel eingesetzt werden sollen.

Die Bestrahlung oder die Detektion kann auch mit polarisierter elektromagnetischer Strahlung erfolgen. In diesem Fall kann die Ausrichtung der Polarisationsebene gewechselt und die elektromagnetische Strahlung mit unterschiedlicher Polarisation emittiert und/oder entsprechend detektiert werden.

Mit der Erfindung können die Schichtdicke(n), die optische(n) Brechzahl(n), deren wellenlängenabhängigen Verläufe, die Absorptionskonstante(n), deren wellenlängenabhängigen Verläufe, die Oberflächengüte der Probe oder mindestens einer auf der Probe ausgebildeten Schicht, die Ladungsträgerkonzentration und/oder die Anzahl und/oder Größe von Defekten/Partikel oder Inhomogenitäten in der Probe oder mindestens einer Schicht bestimmt werden. So kann beispielsweise eine Dicken- und eine Oberflächengütebestimmung gleichzeitig durchgeführt werden. Dabei kann die Oberflächenrauheit bestimmt werden. Es kann auch die Größe einzelner Defekte oder Inhomogenitäten (Unterschiede in der Werkstoff- oder Materialzusammensetzung) und/oder deren Anzahl pro Fläche bestimmt werden.

Insbesondere bei großflächigen Proben können die Detektoren und die Probe entlang mindestens einer Achse relativ und dabei bevorzugt in einem konstanten Abstand zueinander bewegt werden. So kann bei statisch fixierten Detektoren und Strahlungsquelle eine Probe in einer Achse bewegt werden. Dies kann mit einem entsprechend beweglichen Tisch, auf dem eine Probe angeordnet ist, in einer x- und ggf. auch in einer y-Richtung bewegt werden. Es ist aber auch die Abwicklung von Rolle zu Rolle möglich, wenn die Probe aus einem flexibel verformbaren Werkstoff, beispielsweise in Form einer Folie vorliegt.

An der Strahlungsquelle können die elektromagnetische Strahlung formende Elemente vorhanden sein. In einer einfachen Ausführung kann die Strahlungsquelle ein Mikroskop sein. Es kann aber auch eine Strahlungsquelle in einem Hohlkörper angeordnet sein, aus dem die elektromagnetische Strahlung diffus austreten und auf die zu bestrahlende Fläche gerichtet werden kann. Der Hohlkörper kann eine Kugel oder Zylinder sein. Es sollte eine gleichzeitig zu detektierende Fläche homogen bestrahlt werden können. Bei einer Strahlungsquelle mit strahlformenden optischen Elementen sollten bei der Auswahl der jeweils eingesetzten optischen Elemente, die zur Strahlformung dienen, der genutzte Wellenlängenbereich berücksichtigt werden.

Bevorzugt kann im Strahlengang der elektromagnetischen Strahlung eine den Einfall von gestreuter elektromagnetischer Strahlung vermeidende Blende vor den Detektoren angeordnet sein.

Von der Strahlungsquelle kann elektromagnetische Strahlung emittiert werden, deren Wellenlängen bei der UV-Strahlung beginnen und bei der IR-Strahlung enden. Besonders bevorzugt ist Strahlung aus dem NIR und IR - Bereich also von 700 nm bis 10000 nm. Es sollten in einem genutzten Wellenlängenbereich für die Bestrahlung möglichst alle Wellenlängen innerhalb des jeweiligen Intervalls genutzt werden können. Die Grenzen sollten allein durch den Empfindlichkeitsbereich der eingesetzten Detektoren und den optischen Eigenschaften der Strahlführungskomponenten vorgegeben sein. Bei sehr dünnen Schichten kann bevorzugt mit Wellenlängen im UV/VIS-Bereich (ab 250 nm) gearbeitet werden.

Es kann dort auch mindestens ein Element, mit dem eine gezielte Wahl der Polarisation der elektromagnetischen Strahlung erreichbar ist, vorhanden oder darin integriert sein.

Eine Probe kann auch ein Mehrschichtaufbau, mehrerer aus unterschiedlichen Materialien oder Werkstoffen gebildeten Schichten, sein. Dies kann beispielsweise ein Substrat auf dem für die eingesetzte elektromagnetische Strahlung zumindest teilweise transparente Schichten ausgebildet sind. Dabei kann auch das Substrat entsprechend transparent sein. Die Transparenz kann einen Teil des Wellenlängenspektrums der emittierten elektromagnetischen Strahlung und/oder einen nichtabsorbierten Teil des gesamten Wellenlängenspektrums der Strahlung betreffen.

Die eingesetzten Detektoren und die elektronische Auswerteeinheit sowie ggf. auch die Strahlungsquelle können ein auch so genanntes Hyper-Spektral-Image-System darstellen, das bei der erfindungsgemäßen Anordnung genutzt werden kann.

Die gleichzeitig ortsaufgelöst detektierten Spektren (an jeder erfassten Position) werden bzgl. des interessierenden Material- oder Werkstoffparameters oder seiner Eigenschaft folgendermaßen ausgewertet.

In einer ersten Variante A kann der gesamte Aufbau mittels eines parametrisierten optischen Modells physikalisch beschrieben werden. Dabei können die zu bestimmende Probenparameter durch Regression (Fit) eines auf Grundlage des optischen Modells simulierten Spektrums an das gemessene Spektrum ermittelt werden, was z.B. durch lineare oder nichtlineare Kurvenanpassung bzw. Minimierung der Summe der Fehlerquadrate (least squares fit)erreicht werden kann. Ist eine hinreichende Anpassung nicht möglich, sollten die Messergebnisse verworfen oder sie können als Störung in der Schicht oder Probenoberfläche betrachtet werden.

Bei einer Variante B kann mit Hilfe von Proben mit bekanntem(en) Zielparameterwert(en) der Zusammenhang " Spektrum - der/die Zielparameter" kalibriert werden. Mithilfe dieses Kalibriermodells kann aus jedem gemessenen Spektrum (an jedem Ort) der /die Zielparameter bestimmt werden. Zur Kalibrierung können Methoden der multivarianten mathematisch-statistischen Datenauswertung verwendet werden, wie dies z.B. Hauptkomponentenanalyse (PCA), Partial least Square Analyse (PLS) sind.

Dabei sollte über den gesamten der zu untersuchende Probenbereich homogen beleuchtet werden. Ansonsten überlagern sich durch die Bestrahlung verursachte laterale Intensitätsschwankungen die durch die Probe bedingten (und auszuwertenden) Intensitätsschwankungen, was zu Fehlern führt. Zur Realisierung eines lateral homogenen Lichtfeldes zur Bestrahlung einer kleinen Fläche auf Proben eine Mikroskopoptik mit homogener Mikroskopbeleuchtung genutzt werden. Für großflächigere Proben kann zur Bestrahlung ein "Diffusorsetup", insbesondere mindestens eine Strahlungsquelle, die innerhalb eines Hohlkörpers angeordnet ist(z.B. eine Ulbrichtkugel, oder ein Hohlzylinder), eingesetzt werden.

Bei der Aufnahme von Spektren unter einem definierten Einfallswinkel der elektromagnetischen Strahlung kann für ein Reflexionssetup ein oder mehrere Einfallswinkel im Bereich 0° - 85° genutzt werden.

Es kann eine Kombination unterschiedlicher Messbedingungen erfolgen. Dabei können Transmission/Reflexionsmessung, Kombination unterschiedlicher Einfallswinkel, die Verwendung und Kombination unterschiedlicher Polarisationsebenen der elektromagnetischen Strahlung in unterschiedlichster Form miteinander kombiniert werden.

Es besteht auch die Möglichkeit mehrere Reihen- oder Reihen und Spaltenanordnungen von Detektoren, die dann beispielsweise in Bewegungsrichtung nacheinander angeordnet sein können, einzusetzen. Diese Anordnungen von Detektoren können jeweils bei unterschiedlichen Messbedingungen detektieren.

Mit Anordnungen von Detektoren, deren Zeile/Reihe durch Verwendung von unterschiedlichen optischen Anordnungen (unterschiedliche optische Elemente) ausgebildet ist oder die modifiziert werden können, kann bei unterschiedlichen Messbedingungen detektiert werden.

Mit der Erfindung kann eine schnelle Charakterisierung einer gesamten Probe bzgl. eines Zielparameters in kurzer Zeit erreicht werden.

Der Nutzer kann beispielsweise umgehend, z.B. ein "Schichtdickenbild" der Probe erhalten. Es ist auch eine bildliche Darstellung von Defekten oder der lokalen Ladungsträgerkonzentration oder der chemischen Zusammensetzung möglich.

Die gewonnen Informationen können für die Überwachung von Beschichtungsprozessen (inline-Kontrolle), die Entwicklung von Schichtsystemen und auch die Qualitätskontrolle (laterale Verteilung relevanter Schichtparameter) genutzt werden.

## Patentansprüche

1. Anordnung zur Bestimmung von Eigenschaften und/oder Parametern einer Probe und/oder mindestens einer auf einer Oberfläche einer Probe ausgebildeten Schicht, bei der
mehrere Detektoren, die zur ortsaufgelösten spektralen Analyse elektromagnetischer Strahlung innerhalb eines Wellenlängenintervalls ausgebildet sind, in einer Reihen oder einer Reihen- und Spaltenanordnung angeordnet und
die Detektoren mit einer elektronischen Auswerteeinheit verbunden und so angeordnet sind, dass
von einer breitbandigen Strahlungsquelle emittierte elektromagnetische Strahlung
entweder
nach einer Reflexion an der Oberfläche der Probe, einer auf der Probe ausgebildeten Schicht oder an der Oberfläche einer Schicht innerhalb der Probe
und/oder
nach dem Durchstrahlen einer für die elektromagnetische Strahlung transparenten Probe
auf die Detektoren auftrifft,
**dadurch gekennzeichnet, dass**
die Bestrahlung so erfolgt, dass auf einer Fläche, von der die elektromagnetische Strahlung reflektiert oder durch die Fläche transmittiert wird, eine homogene Intensität der elektromagnetischen Strahlung eingehalten ist und
die elektronische Auswerteeinheit so ausgebildet ist, dass
die orts- und wellenlängenaufgelöst erfassten Messsignale der Detektoren innerhalb eines Wellenlängenintervalls gleichzeitig mit
einem durch Simulation erhaltenen theoretischen wellenlängenabhängigen Verlauf der jeweiligen Strahlungsintensitäten
oder
einem durch eine Kalibrierung an mindestens einer bekannten Probe erhaltenen Verlauf
verglichen werden, um eine Aussage zur Bestimmung mindestens einer Eigenschaft oder mindestens eines Parameters der Probe oder mindestens einer auf oder an der Probe ausgebildeten Schicht für die erfassten Messpositionen und somit die ortsaufgelöste Verteilung mindestens einer Eigenschaft oder mindestens eines Parameters der Probe oder mindestens einer auf oder an der Probe ausgebildeten Schicht zu erhalten.

2. Anordnung nach Anspruch 1, **dadurch gekennzeichnet, dass** die Bestrahlung der Fläche mit mindestens einem Winkel im Bereich 0 ° bis < 90° in Bezug zur Normalen der Oberfläche der Probe erfolgt.

3. Anordnung nach Anspruch 1 oder 2, **dadurch gekennzeichnet, dass** der Einfallswinkel der elektromagnetischen Strahlung, bevorzugt im Bereich 60° bis 80° veränderbar oder einstellbar ist, wobei die Detektion und Auswertung bevorzugt bei mehreren unterschiedlichen Einfallswinkeln durchführbar ist.

4. Anordnung nach einem der vorhergehenden Ansprüche, **dadurch gekennzeichnet, dass** die Detektion und Auswertung unter Verwendung eines Polarisators mit definierter bekannter Polarisationsebene in Bezug zur Einfallsebene durchführbar ist.

5. Anordnung nach einem der vorhergehenden Ansprüche, **dadurch gekennzeichnet, dass** die laterale Verteilung der Schichtdicke(n),
die optische(n) Brechungskonstante(n), oder deren wellenlängenabhängiger Verlauf,
die Absorptionskonstante(n), oder deren wellenlängenabhängiger Verlauf,
der Oberflächen- bzw. Interfacegüte (Rauheit) der Probe oder mindestens einer auf der Probe ausgebildeten Schicht,
die Ladungsträgerkonzentration und/oder die Anzahl und/oder Größe und/oder Form von Defekten und/oder Partikeln in der Probe oder mindestens einer Schicht bestimmbar ist.

6. Anordnung nach einem der vorhergehenden Ansprüche, **dadurch gekennzeichnet, dass** die Detektoren und die Probe entlang mindestens einer Achse relativ und dabei bevorzugt in einem konstanten Abstand zueinander bewegbar sind.

7. Anordnung nach einem der vorhergehenden Ansprüche, **dadurch gekennzeichnet, dass** die Strahlungsquelle die elektromagnetische Strahlung formende optische Elemente aufweist oder eine elektromagnetische Strahlung diffus auf die Fläche emittierende Strahlungsquelle, die insbesondere innerhalb eines Hohlkörpers angeordnet ist und besonders bevorzugt im Strahlengang der elektromagnetischen Strahlung eine, den Einfall von gestreuter elektromagnetischer Strahlung vermeidende Blende vor den Detektoren angeordnet ist.

8. Anordnung nach einem der vorhergehenden Ansprüche, **dadurch gekennzeichnet, dass** die Probe ein Mehrschichtaufbau, mehrerer aus unterschiedlichen Materialien oder Werkstoffen gebildeten Schichten, ist.

## Claims

1. An arrangement for determining properties and/or parameters of a sample and/or at least one layer formed on a surface of a sample, in which
a plurality of detectors, which are designed for the spatially resolved spectral analysis of electromagnetic radiation within a wavelength interval, are arranged in a row or a row and column arrangement and
the detectors are connected to an electronic evaluation unit and arranged such that
electromagnetic radiation emitted by a broadband radiation source impinges on the detectors
either
after reflection at the surface of the sample, a layer formed on the sample, or at the surface of a layer within the sample
and/or
after passing through a sample that is transparent to electromagnetic radiation,
**characterized in that**
the irradiation takes place such that a homogeneous intensity of the electromagnetic radiation is maintained on a surface from which the electromagnetic radiation is reflected or transmitted through the surface and
the electronic evaluation unit is designed such that
that the spatially and wavelength-resolved measurement signals of the detectors are simultaneously compared within a wavelength interval
with
a theoretical wavelength-dependent profile of the respective radiation intensities obtained by simulation
or
a profile obtained by a calibration on at least one known sample,
in order to obtain a statement on the determination of at least one property or at least one parameter of the sample or at least one layer formed on or at the sample for the recorded measurement positions and thus the spatially resolved distribution of at least one property or at least one parameter of the sample or at least one layer formed on or at the sample.

2. The arrangement according to claim 1, **characterized in that** the surface is irradiated at at least an angle in the range from 0° to < 90° in relation to the normal of the surface of the sample.

3. The arrangement according to claim 1 or 2, **characterized in that** the angle of incidence of the electromagnetic radiation can be changed or adjusted, preferably in the range of 60° to 80°, wherein the detection and evaluation are preferably able to be carried out at a plurality of different angles of incidence.

4. The arrangement according to any one of the preceding claims, **characterized in that** the detection and evaluation can be carried out using a polarizer having a defined, known plane of polarization in relation to the plane of incidence.

5. The arrangement according to any one of the preceding claims, **characterized in that** the lateral distribution of the layer thickness(es),
the optical refractive constant(s), or their wavelength-dependent profile,
the absorption constant(s), or their wavelength-dependent profile,
the surface or interface quality (roughness) of the sample or at least one layer formed on the sample,
the charge carrier concentration and/or the number and/or size and/or shape of defects and/or particles in the sample or at least one layer can be determined.

6. The arrangement according to any one of the preceding claims, **characterized in that** the detectors and the sample can be moved along at least one axis relative to one another and preferably at a constant distance from one another.

7. The arrangement according to any one of the preceding claims, **characterized in that** the radiation source has optical elements that shape the electromagnetic radiation or a radiation source that emits electromagnetic radiation diffusely onto the surface, which radiation source is arranged in particular within a hollow body and, particularly preferably in the beam path of the electromagnetic radiation, a diaphragm preventing the incidence of scattered electromagnetic radiation is arranged in front of the detectors.

8. The arrangement according to any one of the preceding claims, **characterized in that** the sample is a multi-layer structure, consisting of a plurality of layers formed from different materials or substances.

## Revendications

1. Dispositif pour déterminer des propriétés et/ou paramètres d'un échantillon et/ou d'au moins une couche réalisée sur une surface d'un échantillon, dans lequel
plusieurs détecteurs, qui sont réalisés pour l'analyse spectrale à résolution spatiale d'un rayonnement électromagnétique à l'intérieur d'un intervalle de longueurs d'ondes, sont disposés en lignes ou en lignes et en colonnes et
les détecteurs sont reliés à une unité d'évaluation électronique et disposés de sorte que
un rayonnement électromagnétique émis par une source de rayonnement à large bande
soit
après une réflexion sur la surface de l'échantillon, une couche réalisée sur l'échantillon ou sur la surface d'une couche à l'intérieur de l'échantillon
et/ou
après la traversée d'un échantillon transparent au rayonnement électromagnétique
frappe les détecteurs,
**caractérisé en ce que**
l'irradiation s'effectue de sorte qu'une intensité homogène du rayonnement électromagnétique est maintenue sur une face à partir de laquelle le rayonnement électromagnétique est réfléchi ou transmis à travers la face, et
l'unité d'évaluation électronique est réalisée de sorte que
les signaux de mesure des détecteurs acquis par résolution spatiale et de longueurs d'ondes sont comparés simultanément à l'intérieur d'un intervalle de longueurs d'ondes
avec
un profil théorique dépendant des longueurs d'ondes des intensités de rayonnement respectives obtenu par simulation
ou
un profil obtenu par un étalonnage sur au moins un échantillon connu
afin d'obtenir une indication concernant la détermination d'au moins une propriété ou d'au moins un paramètre de l'échantillon ou d'au moins une couche réalisée sur ou contre l'échantillon pour les positions de mesure acquises et ainsi la distribution à résolution spatiale d'au moins une propriété ou d'au moins un paramètre de l'échantillon ou d'au moins une couche réalisée sur ou contre l'échantillon.

2. Dispositif selon la revendication 1, **caractérisé en ce que** l'irradiation de la face s'effectue avec au moins un angle de 0° à < 90° par rapport à la normale de la surface de l'échantillon.

3. Dispositif selon la revendication 1 ou 2, **caractérisé en ce que** l'angle d'incidence du rayonnement électromagnétique, de préférence dans la plage de 60° à 80°, est modifiable ou réglable, dans lequel la détection et l'évaluation peuvent de préférence être mises en oeuvre pour plusieurs angles d'incidence différents.

4. Dispositif selon l'une quelconque des revendications précédentes, **caractérisé en ce que** la détection et l'évaluation peuvent être mises en oeuvre à l'aide d'un polariseur avec un plan de polarisation connu défini par rapport au plan d'incidence.

5. Dispositif selon l'une des revendications précédentes, **caractérisé en ce que** la distribution latérale de l'épaisseur de la ou des couches,
la ou les constantes de réfraction optique ou leur évolution en fonction de la longueur d'onde,
la(les) constante(s) d'absorption, ou leur profil dépendant des longueurs d'ondes,
la qualité de surface ou d'interface (rugosité) de l'échantillon ou d'au moins une couche réalisée sur l'échantillon,
la concentration en porteurs de charge et/ou le nombre et/ou la taille et/ou forme de défauts et/ou particules dans l'échantillon ou au moins une couche peuvent être déterminés.

6. Dispositif selon l'une des revendications précédentes, **caractérisé en ce que** les détecteurs et l'échantillon sont mobiles l'un par rapport à l'autre le long d'au moins un axe, de préférence à une distance constante l'un de l'autre.

7. Dispositif selon l'une des revendications précédentes, **caractérisé en ce que** la source de rayonnement présente des éléments optiques structurant le rayonnement électromagnétique ou une source de rayonnement émettant un rayonnement électromagnétique diffus sur la surface est disposée de préférence à l'intérieur d'un corps creux et, de manière particulièrement préférée, un diaphragme permettant d'éviter l'incidence d'un rayonnement électromagnétique diffusé est disposé devant les détecteurs sur la trajectoire du rayonnement électromagnétique.

8. Dispositif selon l'une des revendications précédentes, **caractérisé en ce que** l'échantillon est une structure constituée de plusieurs couches composées de matières ou matériaux différents.
